# EUROPÄISCHE PATENTSCHRIFT

(11) **EP 2 686 454 B1**
(45) Veröffentlichungstag und Bekanntmachung des Hinweises auf die Patenterteilung: **15.11.2017**
(21) Anmeldenummer: 12702479.2
(22) Anmeldetag: 26.01.2012
(51) Int. Cl.: C14C 3/08, C14C 3/28, C14C 9/00, C14C 11/00, C14B 1/44, B64D 11/06, B60N 2/58

(54) **VERFAHREN ZUR HERSTELLUNG VON LEDER ZUM BELEDERN VON FLUGZEUGSITZEN**
PROCESS FOR PREPARING LEATHER FOR COVERING AIRLINE SEATS
PROCÉDÉ DE PRÉPARATION DE CUIR POUR RECOUVRIR DES SIÈGES D'AVION

(30) Priorität: 17.03.2011 AT 1562011 U
(43) Veröffentlichungstag der Anmeldung: 22.01.2014
(73) Patentinhaber: Wollsdorf Leder Schmidt & Co. Ges.m.b.H., 8181 Wollsdorf (AT)
(72) Erfinder: ACKERMANN, Gregor, A-8181 Unterfladnitz (AT); ZOTTLER, Manuel, A-8162 Passail (AT)
(74) Vertreter: Röggla, Harald
(86) Internationale Anmeldenummer: PCT/EP2012/051219
(87) Internationale Veröffentlichungsnummer: WO 2012/123154

(56) Entgegenhaltungen:
- US-A1- 2008 104 766
- US-A1- 2008 299 406
- DATABASE WPI Week 201110 Thomson Scientific, London, GB; AN 2011-B08391 XP002673883, & JP 2011 016931 A (HOKUYO KK) 27. Januar 2011 (2011-01-27)

## Beschreibung

Die Erfindung bezieht sich auf ein Herstellungsverfahren zur Herstellung von Fertigleder für die Belederung von Bauteilen, wobei mit einer Rohhaut als Ausgangsprodukt folgende Verfahrensschritte zur Bearbeitung einer Lederhaut zur Erzeugung des Fertigleders als Verfahrensendprodukt durchgeführt werden:
- Mechanische Verfahrensschritte, bei denen die Lederhaut mit mechanischen Werkzeugen bearbeitet wird, und
- Chemische Verfahrensschritte, bei denen die Lederhaut mit Chemikalien bearbeitet wird, wobei bei einzelnen Verfahrensschritten sowohl mechanische als auch chemische Wirkungsweisen vereinigt sind.

Das Dokument DD 133969 A1 offenbart ein Verfahren zur Herstellung von Fertigleder, wobei in diesem Dokument spezielle Verfahrensschritte bezüglich der Chromgerbung offenbart sind.

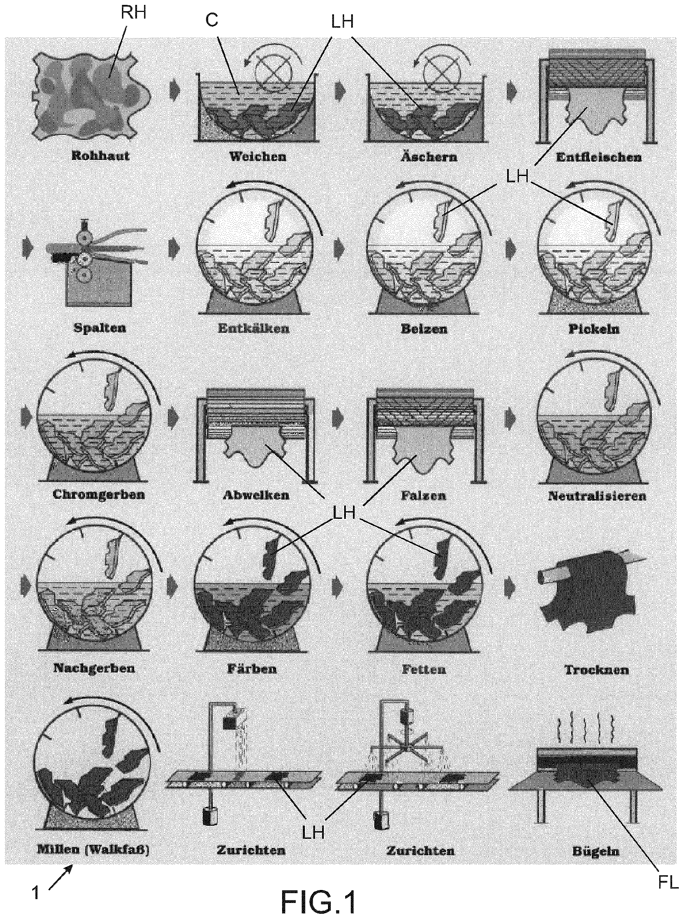

In Figur 1 der beiliegenden Figuren sind symbolisch die einzelnen Verfahrensschritte eines Herstellungsverfahrens zu Herstellung von Leder dargestellt, wie dies gemäß dem Stand der Technik durchgeführt wird. Als Ausgangsprodukt des Herstellungsverfahrens dienen Tierhäute, wie beispielsweise Rinderhäute, in der Form einer Rohhaut RH. In dieser Beschreibung wird das in den verschiedenen Verfahrenschritten des Herstellungsverfahrens erzeugte Zwischenprodukt als Lederhaut LH und das Endprodukt des Herstellungsverfahrens als Fertigleder FL bezeichnet.

Als erster sowohl mechanische als auch chemische Wirkungsweisen vereinender Verfahrens schritt des Weichens wird die Lederhaut LH zum Entfernen von Salz und Schmutz in eine Chemikalie C eingelegt, die Tenside und Enzyme enthält. Durch Rotation in der Chemikalie C wird der gewünschte Reinigungseffekt erzielt. Nach dem Weichen folgt ein Verfahrensschritt des Äscherns und in weiterer Folge die weiteren in Figur 1 dargestellten Verfahrensschritte, bis als Endprodukt des Herstellungsverfahrens gemäß dem Stand der Technik das Fertigleder FL erhalten wird.

Bei dem bekannten Verfahren zur Herstellung von Fertigleder hat sich als Nachteil erwiesen, dass das hergestellte Fertigleder nicht den besonderen Anforderungen entspricht, die an Fertigleder gestellt werden, das beispielsweise zum Beledern von Fahrzeugrauminnenteilen und hierbei insbesondere zum Beledern von Flugzeugsitzen verwendet werden soll. Hierfür muss das Fertigleder sowohl mechanisch reißfest und strapazierfähig, als auch besonders leicht sein, um das Gesamtgewicht des Flugzeuges möglichst gering zu halten. Als weitere Anforderung ist eine hohe Flammhemmung notwendig, damit im Flugzeug befindliche Sitze bei Einwirkung von hohen Temperaturen nicht oder zumindest möglichst lange nicht zu brennen beginnen.

Das Dokument DATABASE WPIWeek 201110 Thomson Scientific, London, GB;AN 2011-B08391& JP 2011 016931 A (IPDL-Übersetzung) offenbart ebenfalls ein Verfahren zur Herstellung von Fertigleder gemäß dem Oberbegriff des Anspruchs 1.

Der Erfindung liegt somit die Aufgabe zugrunde ein Verfahren zur Herstellung von Leder zu schaffen, bei dem die vorstehend angeführten Nachteile vermieden werden. Die Erfindung löst die Aufgabe dadurch, dass bei einem Verfahrensschritt der Nachgerbung synthetische und/oder vegetabilische Gerbstoffe, Fettungsmittel, mikroverkapselte Hilfsmittel auf Basis von Amonium, Phosphat, Phosphor und deren Esterverbindungen und natürliche Zusätze auf Basis von Kautschuk und Milchprodukten verwendet werden und, dass bei einem Verfahrensschritt der Lederhautstärkereduktion die Lederstärke der Lederhaut durch spalten und/oder schleifen ohne Verringerung der physikalischen Echtheit reduziert wird und, dass bei einem Verfahrensschritt des Flammschutzauftrags auf die Fleischseite der Lederhaut ein Auftragsmaterial bestehend aus Acryl-, Polyurethane-, Vinylacetate Dispersion mit einem Flammschutz auf Basis von zyklischen Die- und Triphosphaten, organischen Ammonium mit Schwefel- und Phosphorverbindungen aufgetragen wird.

Durch die erfindungsgemäßen Maßnahmen ist der Vorteil erhalten, dass die Dicke der Lederhaut durch mechanisches Spalten bzw. Schleifen auf eine solche Stärke reduziert wird, bei der gerade noch Sicherstellt ist, dass die physikalische Echtheit der Lederhaut erhalten bleibt. Als physikalische Echtheit der Lederhaut versteht der Fachmann die Festigkeiten wie Zugfestigkeit, Stichausreiskraft, Weitereiskraft der Lederhaut, die nach bekannten DIN Normen für Leder geprüft werden.

Durch die Nachgerbung mit synthetischen und/oder vegetabilen Gerbstoffen, speziellen Fettungsmitteln, Kautschuk und mikroverkapselten Zusatzstoffe und Hilfsmitteln wird die Weichheit, wird der Flammschutz und werden die Emissionswerte der Lederhaut verbessert.

Praktische Tests haben ergeben, dass der Flammschutzauftrag des in dem Anspruch beanspruchten Auftragsmaterials und des in dem Anspruch beanspruchten Kaschiermaterials einen sehr guten Flammschutz gewährleisten, weshalb vorteilhafterweise das Fertigleder auch bei sehr hohen Temperaturen praktisch nicht entflammbar ist.

Durch die Kombination aus all diesen Maßnahmen bei einem Herstellungsverfahren zur Herstellung von Fertigleder wird ein sehr leichtes, strapazierfähiges und schwer entflammbares Fertigleder erzeugt, das insbesondere zur Belederung von Fahrzeugsitzen, wie beispielsweise Flugzeugsitzen, ausgezeichnet verwendbar ist.

Auf weitere Vorteile ist anhand des in den Figuren dargestellten Ausführungsbeispiels näher eingegangen.

Figur 1 zeigt symbolisch die einzelnen Verfahrensschritte bei der Herstellung von Fertigleder gemäß dem Stand der Technik.

Die Figuren 2 bis 5 zeigen detailliert die einzelnen Verfahrensschritte des erfindungsgemäßen Herstellungsverfahrens zur Herstellung von Fertigleder.

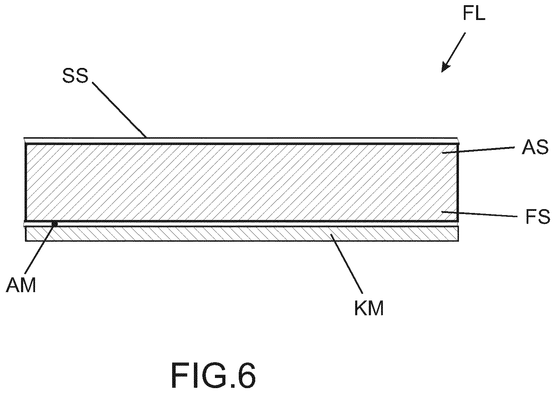

Figur 6 zeigt das mit dem Herstellungsverfahren gemäß den Figuren 2 bis 5 hergestellte Fertigleder in einer Schnittdarstellung.

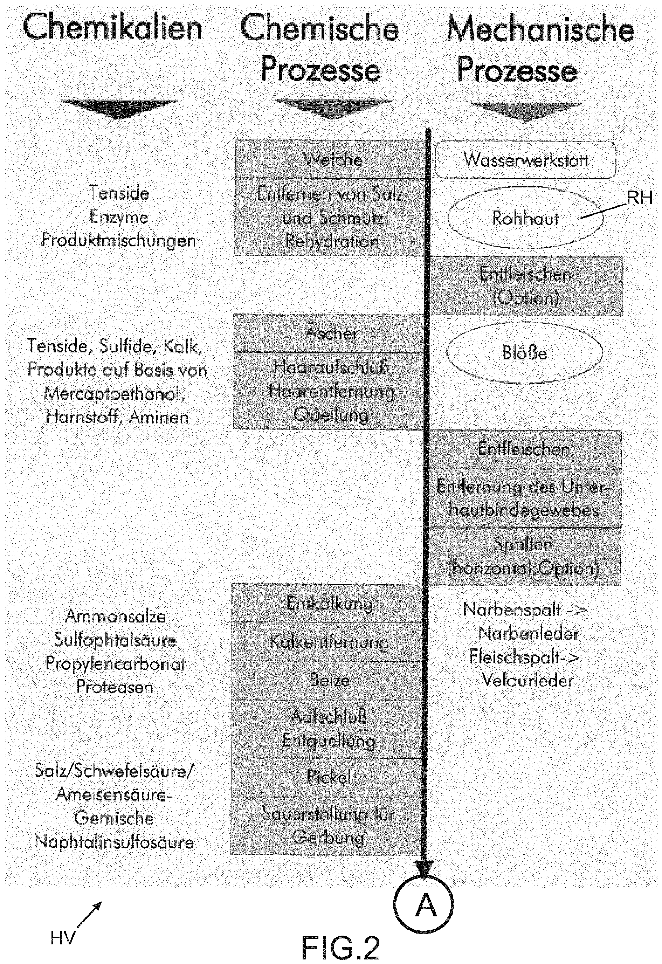

In den Figuren 2 bis 5 sind die einzelnen Verfahrensschritte eines Herstellungsverfahrens HV zur Herstellung von Fertigleder FL detailliert dargestellt, wobei die mechanischen und die chemischen Verfahrensschritte und die dabei verwendeten Chemikalien näher beschrieben sind. Als Rohhaut RH werden Rinderhäute von Kühen oder Bullen verwendet. Dem Fachmann im Fachgebiet der Herstellung von Leder sind die einzelnen Verfahrensschritte gemäß dem Stand der Technik bekannt, weshalb in dieser Beschreibung insbesondere auf die erfindungsgemäßen Verfahrensschritte eingegangen ist.

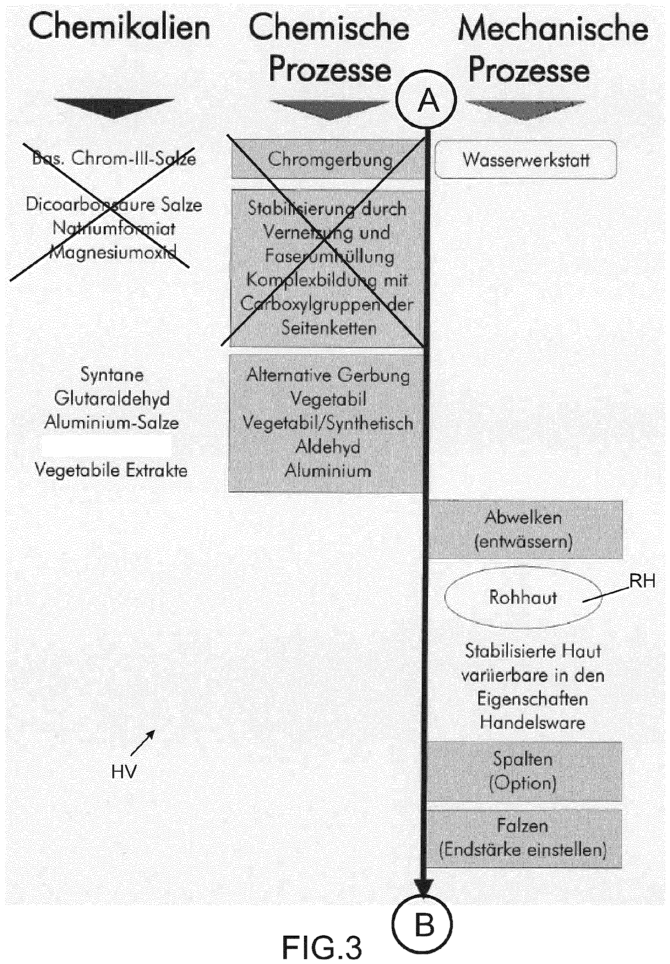

In Figur 3 ist der Verfahrensschritt der Chromgerbung angegeben, wie er bei Herstellungsverfahren gemäß dem Stand der Technik (siehe beispielsweise DD 133969 A1) zur Anwendung kommt. Chrom belastet sowohl die Umwelt als auch das Fertigleder FL, weshalb durch den erfindungsgemäßen Verfahrenschritt der Nachgerbung vorteilhafterweise auf den Verfahrensschritt der Chromgerbung zur Gänze verzichtet werden kann.

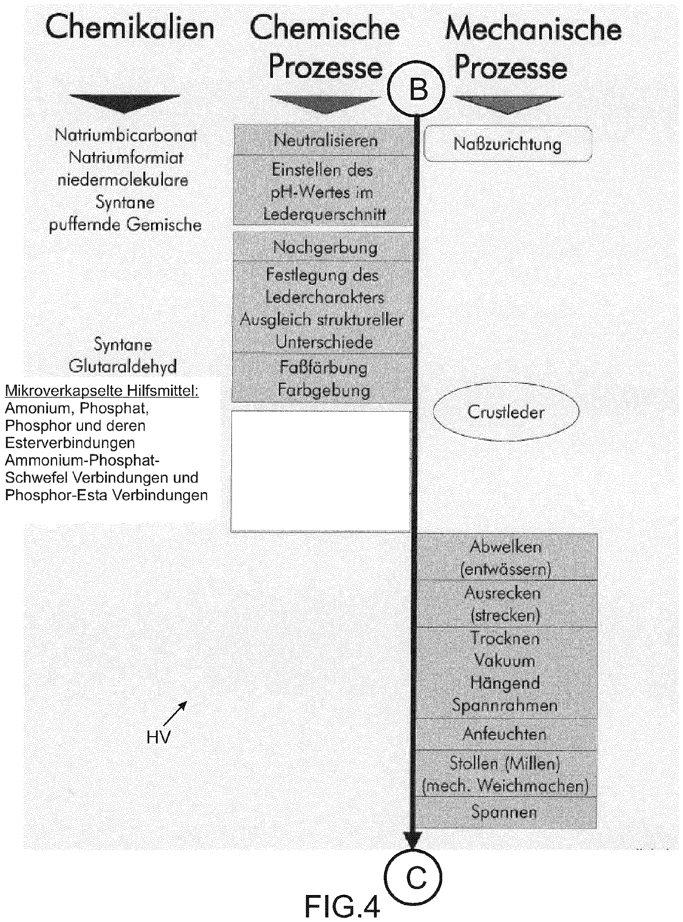

In Figur 4 ist der Verfahrensschritt der Nachgerbung dargestellt, bei dem zur Nachgerbung synthetische und/oder vegetabilische Gerbstoffe, Fettungsmittel, mikroverkapselte Hilfsmittel auf Basis von Amonium, Phosphat, Phosphor und deren Esterverbindungen und natürliche Zusätze auf Basis von Kautschuk und Milchprodukten verwendet werden. Unter mikroverkapselten Hilfsmitteln versteht man hierbei kleinste Mengen an den vorstehend erwähnten Hilfsmitteln, die mit einer Hülle umgeben wurden. Die verwendeten Gerbstoffe enthalten weiters Fettungsmittel, die auf synthetischen und natürlichen Rohstoffen basieren. Als natürliche Zusätze werden hierbei Kautschuk und Milchprodukte, also Kasein oder Milchpulver, verwendet. Bei dem Verfahrensschritt der Nachgerbung werden zusätzlich mirkoverkapselte Hilfsmittel auf Basis von Ammonium-Phosphat-Schwefel Verbindungen und Phosphor-Ester Verbindungen verwendet, die mit Kasein oder Melamin verkapselt sind.

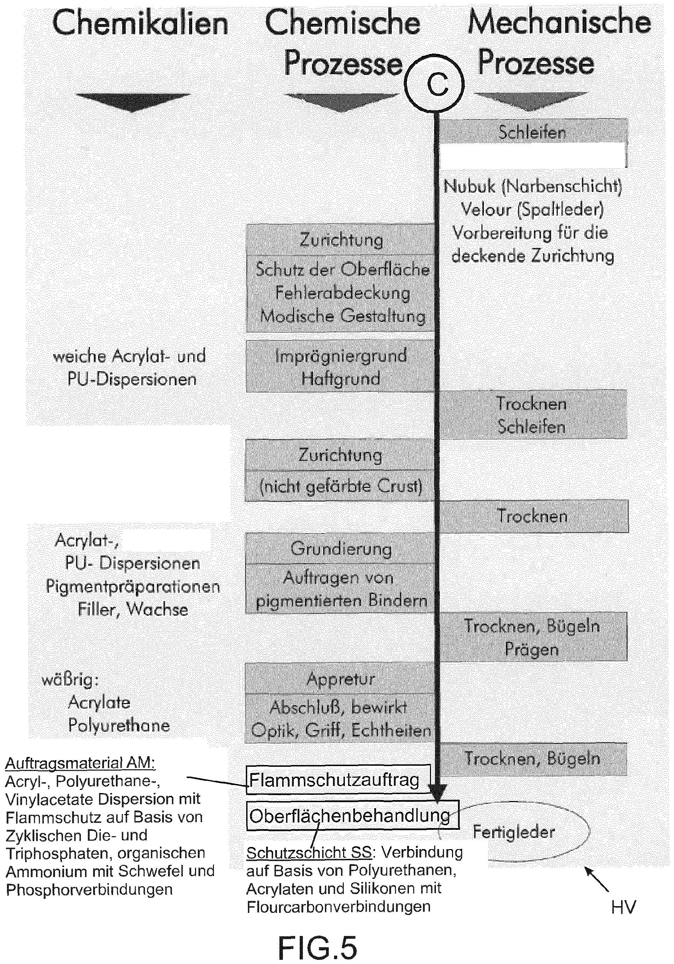

In Figur 5 ist der Verfahrensschritt des Schleifens angegeben, bei dem die Stärke bzw. Dicke der Lederhaut LH durch mechanisches Abschleifen auf der Fleischseite FS reduziert wird. Hierbei wird gerade nur so viel abgeschliffen, dass die physikalische Echtheit der Lederhaut LH erhalten bleibt bzw. nicht verringert wird.

In Figur 5 ist weiters der Verfahrensschritt des Flammschutzauftrags angegeben, bei dem auf die Fleischseite FS der Lederhaut LH ein Auftragsmaterial AM bestehend aus Acryl-, Polyurethane-, Vinylacetate Dispersion mit einem Flammschutz auf Basis von zyklischen Di- und Triphosphaten, organischen Ammonium mit Schwefel- und Phosphorverbindungen aufgetragen wird. Dem Fachmann sind die einzelnen Bestandteile bekannt, deren Kombination ist aus dem Stand der Technik aber nicht bekannt und diese Kombination als Auftragsmaterial AM auf einer Lederhaut LH zu verwenden weist den erheblichen Vorteil der besonders schweren Entflammbarkeit auf. Besonders vorteilhaft ist es, das Auftragsmaterial AM als Schaum auf die Fleischseite FS aufzubringen, da es hierdurch besonders gleichmäßig aufgebracht werden kann und gut in die Fleischseite FS der Lederhaut LH eindringt.

Nach dem Aufschäumen des Auftragsmaterials wird durch Walzen mit einer Walzenkaschieranlage ein flammhemmendes Kaschiermaterial KM auf der Fleischseite FS der Lederhaut LH aufgebracht, wobei das Kaschiermaterial KM Filze aus nachwachsenden Naturfasern und/oder Kunstfasermaterial und/oder Kohlefasermaterial besteht, die mittels PU Thermoverklebung verbunden sind. Die PU Thermoverklebung bildet hierbei ein Klebefließ. Hierdurch ist ein Kaschiermaterial KM erhalten, dass sowohl die mechanische Festigkeit des Fertigleders FL als auch die Widerstandsfähigkeit gegen Entflammen des Fertigleders FL erhöht.

Bei einem das Herstellungsverfahren HV des Fertigleders FL abschließenden Verfahrensschritt der Oberflächenbehandlung des Fertigleders FL wird auf der Außenseite AS des Fertigleders FL eine Schutzschicht SS aufgebracht, die eine Verbindung auf Basis von Polyurethanen, Acrylaten und Silikonen mit Fluorcarbonverbindungen enthält. Diese Oberflächenbehandlung verbessert das Anschmutzverhalten und die Reinigungseigenschaften des Fertigleders FL.

Die Verwendung des gemäß dem Herstellungsverfahren HV hergestellten Fertigleders FL zur Belederung von Fahrzeugsitzen und hierbei insbesondere von Flugzeugsitzen hat sich als vorteilhaft erwiesen. Hierdurch können bezüglich ihres Gewichts sehr leichte, aber schwer entflammbare und Schmutz abweisende belederte Sitze hergestellt werden. Dies reduziert einerseits die Treibstoffkosten des Flugzeugs durch ein geringeres Gesamtgewicht und verlängert andererseits den Verwendungszeitraum der strapazierfähigen und schmutzresistenten Flugzeugsitze.

Es kann erwähnt werden, dass die Kaschierung mit Leichtmettalgewebe (Aluminium etc.) erfolgen kann. Weiters könnte die Mikroverkapselung mit Helium oder nicht brennbaren Gasen erfolgen.

## Patentansprüche

1. Herstellungsverfahren (HV) zur Herstellung von Fertigleder (FL) für die Belederung von Bauteilen, wobei mit einer Rohhaut (RH) als Ausgangsprodukt folgende Verfahrensschritte zur Bearbeitung einer Lederhaut (LH) zur Erzeugung des Fertigleders (FL) als Verfahrensendprodukt durchgeführt werden:
• Mechanische Verfahrensschritte, bei denen die Lederhaut (LH) mit mechanischen Werkzeugen bearbeitet wird, und
• Chemische Verfahrensschritte, bei denen die Lederhaut mit Chemikalien bearbeitet wird, wobei bei einzelnen Verfahrensschritten sowohl mechanische als auch chemische Wirkungsweisen vereinigt sind,
**dadurch gekennzeichnet, dass**
bei einem Verfahrensschritt der Nachgerbung synthetische und/oder vegetabilische Gerbstoffe, Fettungsmittel, mikroverkapselte Hilfsmittel auf Basis von Amonium, Phosphat, Phosphor und deren Esterverbindungen und natürliche Zusätze auf Basis von Kautschuk und Milchprodukten verwendet werden und, dass
bei einem Verfahrensschritt der Lederhautstärkereduktion die Lederstärke der Lederhaut (LH) durch spalten und/oder schleifen ohne Verringerung der physikalischen Echtheit reduziert wird und, dass
bei einem Verfahrensschritt des Flammschutzauftrags auf die Fleischseite (FS) der Lederhaut (LH) ein Auftragsmaterial (AM) bestehend aus Acryl-, Polyurethane-, Vinylacetate Dispersion mit einem Flammschutz auf Basis von zyklischen Di- und Triphosphaten, organischen Ammonium mit Schwefel- und Phosphorverbindungen aufgetragen wird.

2. Herstellungsverfahren (HV) gemäß Anspruch 1, **dadurch gekennzeichnet, dass** bei dem Verfahrensschritt der Nachgerbung weiters mirkoverkapselte Hilfsmittel auf Basis von Ammonium-Phosphat-Schwefel Verbindungen und Phosphor-Ester Verbindungen zum Einsatz kommen, die mit Kasein oder Melamin verkapselt sind.

3. Herstellungsverfahren (HV) gemäß einem der vorherigen Ansprüche, **dadurch gekennzeichnet, dass** bei dem Verfahrensschritt des Flammschutzauftrags das Auftragsmaterial (AM) als Schaum aufgespritzt wird und anschließend durch walzen ein flammhemmendes Kaschiermaterial (KM) auf der Fleischseite (FS) der Lederhaut (LH) aufgebracht wird, wobei das Kaschiermaterial (KM) Filze aus nachwachsenden Naturfasern und/oder Kunstfasermaterial und/oder Kohlefasermaterial besteht, die mittels Kontakt oder Thermoverklebung verbunden sind.

4. Herstellungsverfahren (HV) gemäß einem der vorherigen Ansprüche, **dadurch gekennzeichnet, dass** bei einem Verfahrensschritt der Oberflächenbehandlung des Fertigleders (FL) auf der Außenseite (AS) des Fertigleders (FL) eine Schutzschicht (SS) aufgebracht wird, die eine Verbindung auf Basis von Polyurethanen, Acrylaten und Silikonen mit Fluorcarbonverbindungen enthält.

5. Herstellungsverfahren (HV) gemäß einem der vorherigen Ansprüche, **dadurch gekennzeichnet, dass** auf einen Verfahrensschritt zur Chromgerbung der Lederhaut (LH) gänzlich verzichtet wird.

6. Fertigleder (FL) für die Belederung von Bauteilen, **dadurch gekennzeichnet, dass** es mit dem Herstellungsverfahren (HV) gemäß einem der vorherigen Ansprüche hergestellt wurde und, dass das Fertigleder (FL) ein Gewicht von weniger als 600 Gramm je Quadratmeter aufweist.

7. Verwendung eines Fertigleders (FL) gemäß Anspruch 6, **dadurch gekennzeichnet, dass** das Fertigleder (FL) zur Belederung der Inneneinrichtung von Fahrzeugen und/oder Schiffen und/oder Flugzeugen und insbesondere zur Belederung von Flugzeugsitzen verwendet wird.

## Claims

1. A manufacturing method (HV) for preparing finished leather (FL) for covering components with leather, wherein the following process steps for treating a leather hide (LH) are performed on a raw hide (RH) as an initial product for producing the finished leather (FL) as an end product of the method:
• mechanical process steps in which the leather hide (LH) is treated using mechanical tools, and
• chemical process steps in which the leather hide is treated with chemicals, wherein both mechanical and chemical modes of action are combined in individual process steps, **characterized in that**,
in a process step of retanning, synthetic and/or vegetable tanning materials, fattening agents, microencapsulated auxiliary agents based on ammonium, phosphate, phosphorus and the ester compounds thereof and natural additives based on rubber and milk products are used, and,
in a process step of reducing the thickness of the leather hide, the leather thickness of the leather hide (LH) is reduced by splitting and/or scraping without reducing the physical authenticity, and
in a process step of flame retardant application, an application material (AM) consisting of acrylic-, polyurethane-, vinyl acetate dispersion and having a flame retardant based on cyclic di- and triphosphates and organic ammonium with sulphur and phosphorus compounds is applied on the flesh side (FS) of the leather hide (LH).

2. A manufacturing method (HV) according to claim 1, **characterized in that**, furthermore, microencapsulated auxiliary agents based on ammonium-phosphate-sulphur compounds and phosphorus-ester compounds, which are encapsulated with casein or melamine, are used in the process step of retanning.

3. A manufacturing method (HV) according to any of the preceding claims, **characterized in that**, in the process step of flame retardant application, the application material (AM) is sprayed on as a foam and, subsequently, a flame-retardant laminating material (KM) is applied with rolls on the flesh side (FS) of the leather hide (LH), with the laminating material (KM) consisting of felts of renewable natural fibres and/or a synthetic fibre material and/or a carbon fibre material, which are connected by contact or thermobonding.

4. A manufacturing method (HV) according to any of the preceding claims, **characterized in that**, in a process step of treating the surface of the finished leather (FL), a protective layer (SS) containing a compound based on polyurethanes, acrylates and silicones with fluorocarbon compounds is applied on the outside (AS) of the finished leather (FL).

5. A manufacturing method (HV) according to any of the preceding claims, **characterized in that** a process step of chrome tanning the leather hide (LH) is omitted entirely.

6. A finished leather (FL) for covering components with leather, **characterized in that** it has been produced by the manufacturing method (HV) according to any of the preceding claims and the finished leather (FL) has a weight of less than 600 grams per square metre.

7. The use of a finished leather (FL) according to claim 6, **characterized in that** the finished leather (FL) is used for covering the interior fittings of vehicles and/or ships and/or aircrafts with leather and in particular for covering aircraft seats with leather.

## Revendications

1. Procédé de préparation (HV) pour la fabrication de cuir fini (FL) pour recouvrir des composants, dans lequel on exécute avec une peau brute (RH) en tant que matière première les opérations suivantes pour le traitement d'une peau fraîche (LH) en vue de la production du cuir fini (FL) en tant que produit final du procédé:
• des opérations mécaniques, dans lesquelles la peau fraîche (LH) est traitée avec des outils mécaniques, et
• des opérations chimiques, dans lesquelles la peau fraîche est traitée avec des produits chimiques, dans lequel dans des opérations séparées des modes d'action aussi bien mécaniques que chimiques sont réunis,
**caractérisé en ce que**
dans une opération de retannage, on utilise des tannins synthétiques ou végétaux, des agents de graissage, des adjuvants microencapsulés à base d'ammonium, de phosphate, de phosphore et de leurs composés esters et des ajouts naturels à base de caoutchouc et de produits laitiers, et dans une opération de réduction de l'épaisseur de cuir de la peau fraîche on réduit l'épaisseur de la peau fraîche (LH) par refente et/ou ponçage sans diminution de l'intégrité physique, et
dans une opération de dépôt d'une protection anti-flamme on dépose sur le côté chair (FS) de la peau fraîche (LH) une matière de dépôt (AM) composée d'une dispersion acrylique, polyuréthane, acétate de vinyle avec une protection contre les flammes à base de di- et triphosphates cycliques, d'ammonium organique avec des composés de soufre et de phosphore.

2. Procédé de préparation (HV) selon la revendication 1, **caractérisé en ce que** dans l'opération de retannage, on utilise en outre des adjuvants microencapsulés à base de composés d'ammonium-phosphate-soufre et de composés d'esters phosphoriques, qui sont encapsulés avec de la caséine ou de la mélamine.

3. Procédé de préparation (HV) selon l'une quelconque des revendications précédentes, **caractérisé en ce que** dans l'opération de dépôt de protection anti-flamme on projette le matériau de dépôt (AM) sous forme de mousse et on dépose ensuite par laminage un matériau de doublage ignifuge (KM) sur le côté chair (FS) de la peau fraîche (LH), dans lequel le matériau de doublage (KM) se compose de feutre en fibres naturelles à croissance postérieure et/ou de matériau en fibres de matière plastique et/ou de matériau en fibres de carbone, qui sont assemblées par contact ou collage à chaud.

4. Procédé de préparation (HV) selon l'une quelconque des revendications précédentes, **caractérisé en ce que** dans une opération de traitement de surface du cuir fini (FL) on dépose sur le côté extérieur (AS) du cuir fini (FL) une couche de protection (SS), qui contient un composé à base de polyuréthanes, acrylates et silicones avec des composés fluorocarbonés.

5. Procédé de préparation (HV) selon l'une quelconque des revendications précédentes, **caractérisé en ce que** l'on se passe complètement d'une opération de tannage au chrome de la peau fraîche (LH).

6. Cuir fini (FL) pour le recouvrement de composants, **caractérisé en ce qu'**il a été fabriqué par le Procédé de préparation (HV) selon l'une quelconque des revendications précédentes, et **en ce que** le cuir fini (FL) présente un poids de moins de 600 grammes par mètre carré.

7. Utilisation d'un cuir fini (FL) selon la revendication 6, **caractérisée en ce que** le cuir fini (FL) est utilisé pour recouvrir l'équipement intérieur de véhicules et/ou de bateaux et/ou d'avions et en particulier pour recouvrir des sièges d'avion.
